# EUROPEAN PATENT SPECIFICATION

(11) **EP 4 465 544 B1**
(45) Date of publication and mention of the grant of the patent: **28.10.2026**
(21) Application number: 22922789.7
(22) Date of filing: 28.01.2022
(51) Int. Cl.: H04B 1/401

(54) **TRANSCEIVER CIRCUIT, TRANSCEIVER, AND RELATED APPARATUS**
SENDER-EMPFÄNGER-SCHALTUNG, SENDER-EMPFÄNGER UND ZUGEHÖRIGE VORRICHTUNG
CIRCUIT ÉMETTEUR-RÉCEPTEUR, ÉMETTEUR-RÉCEPTEUR ET APPAREIL ASSOCIÉ

(43) Date of publication of application: 20.11.2024
(73) Proprietor: Huawei Technologies Co., Ltd., Shenzhen, Guangdong 518129 (CN)
(72) Inventor: GAO, Guanghui, Shenzhen, Guangdong 518129 (CN); WU, Feng, Shenzhen, Guangdong 518129 (CN); DAI, Xin, Shenzhen, Guangdong 518129 (CN); LI, Yantao, Shenzhen, Guangdong 518129 (CN); YANG, Jisong, Shenzhen, Guangdong 518129 (CN)
(74) Representative: Pfenning, Meinig & Partner mbB
(86) International application number: PCT/CN2022/074633
(87) International publication number: WO 2023/141947

(56) References cited:
- CN-A- 106 559 100
- CN-A- 106 849 984
- CN-A- 110 311 226
- US-A- 6 130 897
- US-B2- 6 434 122

## Description

### TECHNICAL FIELD

This application relates to the field of communication technologies, and in particular, to a transceiver circuit, a transceiver, and a related apparatus.

### BACKGROUND

With the continuous development of mobile communication technologies, a network device has increasingly strong requirements for low costs, low power consumption, compactness, high bandwidth, and compatibility with a plurality of modes. Currently, time division duplex (time division duplex, TDD) and frequency division duplex (frequency division duplex, FDD) are used as mainstream modes in mobile communication. The TDD and the FDD belong to different duplex modes. Generally, in a conventional network device, a module corresponding to each of two modes is developed independently. With increasingly limited station resources, currently, device vendors have gradually launched a product in which the TDD and the FDD share a same module.

The product in which the TDD and the FDD share the same module means that a design of a shared circuit and a shared path is applied to radio frequency front-ends of the TDD and the FDD. A TDD transmit channel and an FDD transmit channel are a same channel, in other words, a TDD transmit signal and an FDD transmit signal share a same transmit channel. The FDD is in an always TX state. Therefore, a power amplifier of the transmit channel cannot be disabled, and this amplifies a noise in a TDD frequency band. The noise and a TDD receive signal are in a same frequency band. Consequently, the noise deteriorates sensitivity of a TDD receive channel.

US 6434122B2 discloses a transceiver architecture that allows a common set of filters to be used for either FDD (Frequency Division Duplex) or TDD (Time Division Duplex) operation in a given range of frequencies, thereby reducing circuitry count and implementation costs.

CN106559100A discloses a communication radio frequency front-end module and a communication method, which are used to solve the problems of the large number of communication radio frequency front-end devices and complex structures in the prior art.

US6130897A discloses a dual mode system which can use, in a single handset, both a frequency Division Duplex (hereinafter FDD) system which uses different frequencies for transmission and reception in the TDMA system and a Time Division Duplex (hereinafter TDD) system which time-shares transmission and reception, and also discloses to a TDD dual band system which switches a plurality of frequency bands in the TDD system.

### SUMMARY

In view of this, according to a first aspect, an embodiment of this application provides a transceiver circuit, including:
a transmitting submodule, a signal transmission module, a switch circuit, a first filter circuit, a second filter circuit, a receiving submodule, and an antenna. The transmitting submodule is connected to the first filter circuit through the signal transmission module. A first end of the first filter circuit is connected to the signal transmission module, a second end of the first filter circuit is connected to the second filter circuit, and a third end of the first filter circuit is connected to the switch circuit. The first filter circuit is configured to separate a time division duplex TDD transmit signal and a frequency division duplex FDD transmit signal that are sent by the transmitting submodule. The first filter circuit transmits the FDD transmit signal to the second filter circuit through the second end of the first filter circuit. The first filter circuit transmits the TDD transmit signal to the switch circuit through the third end of the first filter circuit. A first end of the switch circuit is connected to the first filter circuit, a second end of the switch circuit is connected to the second filter circuit, and a third end of the switch circuit is connected to the receiving submodule. When the first end of the switch circuit and the second end of the switch circuit are turned on, and the second end of the switch circuit and the third end of the switch circuit are turned off, the switch circuit is configured to transmit the TDD transmit signal sent by the transmitting submodule. When the second end of the switch circuit and the third end of the switch circuit are turned on, and the first end of the switch circuit and the second end of the switch circuit are turned off, the switch circuit is configured to transmit a TDD receive signal received by the second filter circuit. The second filter circuit is separately connected to the first filter circuit, the switch circuit, the receiving submodule, and the antenna. The second filter circuit is configured to perform filtering processing on the TDD transmit signal and the FDD transmit signal that are sent by the transmitting submodule. The second filter circuit is further configured to perform filtering processing on the TDD receive signal and an FDD receive signal that are received by the antenna.

In an embodiment of this application, the first filter circuit is introduced to separate the TDD transmit signal and the FDD transmit signal, to effectively avoid mutual interference between the TDD transmit signal and the FDD transmit signal, and significantly improve performance of the FDD transmit signal. The switch circuit is disposed between the first filter circuit and the second filter circuit. This can provide effective isolation for the transmit signals of the transmitting submodule. In addition, the performance of the FDD transmit signal is not affected when switching of the switch circuit is performed. Two times of filtering of the first filter circuit and the second filter circuit are performed, so that a requirement on a performance indicator of a single filter circuit can be reduced. This facilitates a low-cost and compact design of the filter circuit.

With reference to the first aspect, in some implementations, the transceiver circuit further includes a cancellation submodule. The cancellation submodule is separately connected to the transmitting submodule and the signal transmission module. The cancellation submodule is configured to obtain a transmission noise of a transmit channel between the transmitting submodule and the signal transmission module. The cancellation submodule is further configured to generate a cancellation signal based on the transmission noise. The cancellation signal is for performing cancellation processing on the transmission noise.

In an embodiment of this application, the cancellation signal generated by the cancellation submodule can reduce impact of the transmit signal and a noise floor of the transmit channel on the receive signal, and can reduce a requirement on a performance indicator of the second filter circuit. This facilitates the low-cost and compact design of the filter circuit. In addition, a requirement on the isolation of the switch circuit can be effectively reduced.

With reference to the first aspect, in some implementations, the cancellation submodule specifically includes a cancellation processor and a cancellation coupler 401. The cancellation processor is connected to the transmit channel through the cancellation coupler 401. The cancellation processor is specifically configured to obtain the transmission noise through the cancellation coupler 401. The cancellation processor is specifically configured to generate the cancellation signal based on the transmission noise. The cancellation processor is specifically configured to send the cancellation signal to the transmission channel. The transmission channel includes the transmit channel and/or a receive channel.

The cancellation processor is specifically configured to perform cancellation processing on the transmission noise based on the cancellation signal.

With reference to the first aspect, in some implementations of the manner, the cancellation coupler 401 is a microstrip.

With reference to the first aspect, in some implementations, the transmission noise includes one or more of the following: a noise floor generated by the TDD transmit signal in a TDD frequency band, a noise floor and an intermodulation noise of the FDD transmit signal in the TDD frequency band, and a noise floor and an intermodulation noise of the FDD transmit signal in an FDD receive frequency band.

With reference to the first aspect, in some implementations, the transceiver circuit further includes a circulator load. The signal transmission module is a circulator. A first end of the circulator is connected to the transmitting submodule, a second end of the circulator is connected to the circulator load, and a third end of the circulator is connected to the first filter circuit. The circulator load and the circulator may also be combined into an isolator, and the circulator load may also be referred to as isolator load.

In an embodiment of this application, the second end of the circulator is connected to the circulator load. Therefore, there is isolation between the third end of the circulator and the first end of the circulator, to effectively reduce impact, on the transmit channel, caused when switching of the switch circuit is performed.

With reference to the first aspect, in some implementations, the first filter circuit is an on-board filter or a cavity filter.

With reference to the first aspect, in some implementations, the second filter circuit includes an FDD transmit filter, an FDD receive filter, and a TDD transceiver filter. The FDD transmit filter is separately connected to the second end of the first filter circuit and the antenna. The FDD receive filter is separately connected to the antenna and the receiving submodule. The TDD transceiver filter is separately connected to the second end of the switch circuit and the antenna.

With reference to the first aspect, in some implementations, the transmitting submodule includes one or more of the following elements: a digital signal processing module, a digital-to-analog converter, a low-pass filter, a variable gain amplifier, a modulator, a phase-locked loop, and a plurality of power amplifiers. The digital signal processing module, the digital-to-analog converter, the low-pass filter, the variable gain amplifier, the modulator, and the plurality of power amplifiers are connected in sequence, and the phase-locked loop is connected to the modulator.

With reference to the first aspect, in some implementations, the receiving submodule includes one or more of the following elements: a digital signal processing module, an analog-to-digital converter, a low-pass filter, a variable gain amplifier, a mixer, a phase-locked loop, and a plurality of low-noise amplifiers. The digital signal processing module, the analog-to-digital converter, the low-pass filter, the variable gain amplifier, the frequency mixer, and the plurality of low-noise amplifiers are connected in sequence, and the phase-locked loop is connected to the mixer.

According to a second aspect, an embodiment of this application provides a transceiver. The transceiver includes a transceiver circuit according to the first aspect and any one of the implementations of the first aspect.

According to a third aspect, an embodiment of this application provides a communication apparatus. The communication apparatus includes the transceiver according to the second aspect.

### BRIEF DESCRIPTION OF DRAWINGS

FIG. 1a is a diagram of a network architecture of a communication system;
FIG. 1b is a diagram of a structure of a transceiver in which FDD and TDD share a same module;
FIG. 2 is a schematic of a transceiver circuit that is frequently used;
FIG. 3 is a schematic of another transceiver circuit that is frequently used;
FIG. 4 is a schematic of a structure of a transceiver circuit according to an embodiment of this application; and
FIG. 5 is a diagram of intermodulation signals generated by FDD transmit signals in an FDD receive frequency band and a TDD receive frequency band.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

In the specification, claims, and accompanying drawings of this application, the terms "first", "second", corresponding term numbers, and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In descriptions of this application, "/" means "or" unless otherwise specified. For example, A/B may indicate A or B. In this application, "and/or" describes only an association relationship for describing associated objects and represents that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c may be in a singular form or a plural form.

The technical solutions in embodiments of this application may be applied to various communication systems, for example, a wideband code division multiple access (wideband code division multiple access, WCDMA) system, a general packet radio service (general packet radio service, GPRS), a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), and a future 6th communication system.

A part operated by an operator in various communication systems may be referred to as an operator network. The operator network may also be referred to as a public land mobile network (public land mobile network, PLMN). The operator network is a network established and operated by a government or an operator approved by a government to provide a land mobile communication service for the public, and is mainly a public network in which a mobile network operator (mobile network operator, MNO) provides a mobile broadband access service for a user. The operator network or the PLMN network described in embodiments of this application may be a network that meets a requirement of a 3rd generation partnership project (3rd generation partnership project, 3GPP) standard, which is referred to as a 3GPP network for short. Generally, the 3GPP network is operated by an operator, and includes but is not limited to a 5th generation (5th generation, 5G) mobile communication network (referred to as a 5G network for short), a 4th generation (4th generation, 4G) mobile communication network (referred to as a 4G network for short), or a 3rd generation (3rd generation, 3G) mobile communication technology network (referred to as a 3G network for short). The 3GPP network further includes a future 6G network. For ease of description, the operator network (for example, a mobile network operator (mobile network operator, MNO) network) is used as an example for description in embodiments of this application.

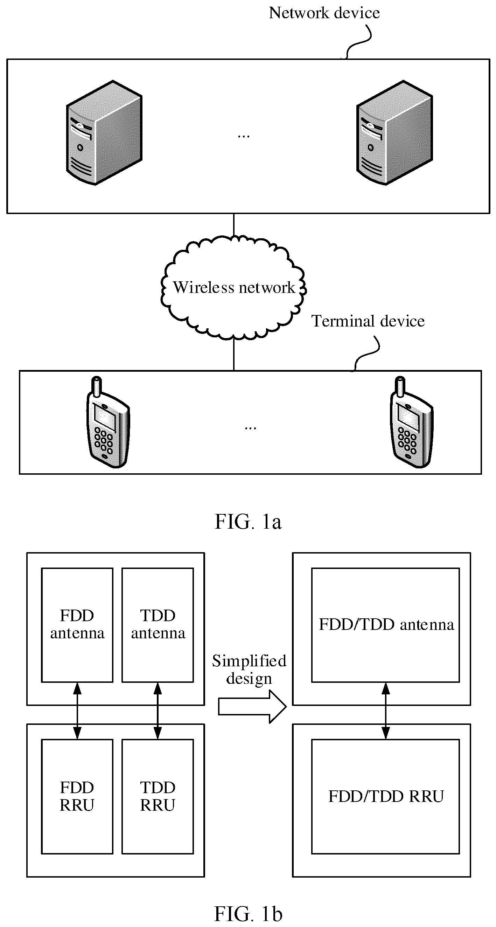

To facilitate understanding of embodiments of this application, a 5G network architecture shown in FIG. 1a is used as an example to describe an application scenario used in this application. It may be understood that an architecture of another communication network is similar to that of the 5G network, and therefore details are not described. FIG. 1a is a diagram of a network architecture of a communication system. The network architecture may include a terminal device (which may also be referred to as a user equipment part).

The terminal device part includes the terminal device, and the terminal device may also be referred to as user equipment (user equipment, UE). The terminal device in embodiments of this application is a device having a wireless transceiver function, and may communicate with one or more core networks (core networks, CNs) through an access network device that is in a (radio) access network ((radio) access network, (R)AN). The terminal device may also be referred to as an access terminal, a terminal, a subscriber unit, a subscriber station, a mobile station, a mobile, a remote station, a remote terminal, a mobile device, a user terminal, a wireless network device, a user agent, a user apparatus, or the like. The terminal device may be deployed on land, where the deployment includes indoor or outdoor, or handheld or vehicle-mounted deployment, may be deployed on water (for example, on a ship), or may be deployed in air (for example, on aircraft, a balloon, or a satellite). The terminal device may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, an uncrewed aerial vehicle device, a terminal in an internet of things or an internet of vehicles, a terminal in any form in a 5th generation (5th generation, 5G) network and a future network, relay user equipment, a terminal in a future evolved public land mobile network (public land mobile network, PLMN), or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. This is not limited in embodiments of this application. In embodiments of this application, the terminal device further includes an uncrewed aerial vehicle and an uncrewed aerial vehicle remote control. It should be noted that the uncrewed aerial vehicle in embodiments of this application may further include a vehicle (vehicle) that can travel autonomously, or a vehicle that can travel based on control instructions of a remote control, shipping (shipping) that can travel autonomously, shipping that can travel based on control instructions of a remote control, or the like.

The terminal device may establish a connection to the operator network through an interface (for example, N1) provided by the operator network, and use an operator service such as data and/or voice provided by the operator network. The terminal device may further access a data network through the operator network, and use an operator service deployed on the data network and/or a service provided by a third party. The third party may be a service party other than the operator network and the terminal device, and may provide another service such as data and/or voice for the terminal device. A specific representation form of the third party may be specifically determined based on an actual application scenario, and is not limited herein.

The following briefly describes a network function in the operator network.

A network device may be considered as a subnet of the operator network, and is an implementation system between a service node and the terminal device in the operator network. To access the operator network, the terminal device first passes through the network device, and then may be connected to the service node of the operator network through the network device. The access network device (RAN device) in embodiments of this application is a device that provides a wireless communication function for the terminal device, and may also be referred to as an access network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), a small cell device (pico), a mobile switching center, or a network device in the future network. In systems using different radio access technologies, devices with functions of the access network device may have different names. For ease of description, in all embodiments of this application, the foregoing apparatuses that provide the wireless communication function for the terminal device are collectively referred to as the access network device, or referred to as the RAN or the AN for short. It should be understood that a specific type of the access network device is not limited in this specification.

In the terminal device and/or the network device illustrated in FIG. 1a, a transceiver (Transceiver, TRX) is included. For related descriptions of the transceiver, refer to FIG. 1b. FIG. 1b is a diagram of a structure of a transceiver in which FDD and TDD share a same module. A radio remote unit (radio remote unit, RRU) is used as an example. In an existing transceiver, the time division duplex (time division duplex, TDD) and the frequency division duplex (frequency division duplex, FDD) each uses an independent antenna and an independent RRU. In other words, in the original transceiver, the FDD and the TDD each has an independent channel and an independent circuit. With the development of communication technologies, higher requirements are imposed on power consumption and costs of a transceiver. In a current transceiver, the FDD and the TDD usually use a same circuit and a same antenna.

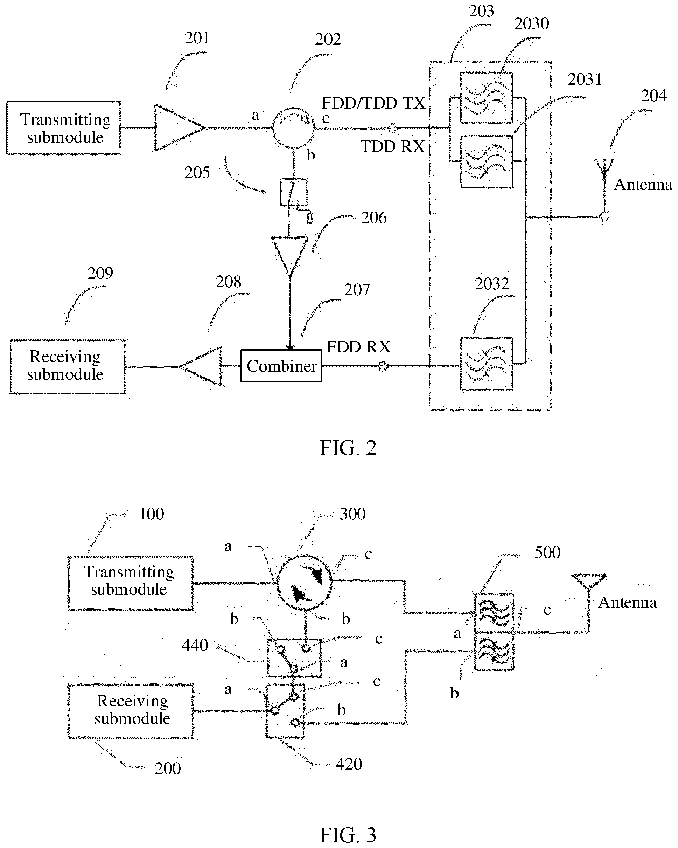

For ease of understanding, the following first describes two current common transceiver circuits. FIG. 2 is a schematic of a common transceiver circuit. The transceiver circuit is shown in FIG. 2. A TDD transmit channel and an FDD transmit channel are a same channel (that is, both use an amplifier 201 and a circulator 202). A transmitting submodule is connected to a duplexer 203 through the amplifier 201 and the circulator 202. The duplexer 203 specifically includes a duplexer 2030, a duplexer 2031, and a duplexer 2032. The duplexer 2030 is a filter of an FDD frequency band, and is configured to perform filtering processing on an FDD transmit signal. The duplexer 2031 is a filter of a TDD frequency band, and is configured to perform filtering processing on a TDD transmit signal. An FDD receive channel is connected to an antenna 204 through the duplexer 2032. The FDD receive channel and a TDD receive channel are connected to a back-end circuit (namely, a receiving submodule 209 and an amplifier 208) through a combiner 207. A switch 205 is separately connected to a port b of the circulator 202 and an amplifier 206.

FIG. 3 is a schematic of another common transceiver circuit. The transceiver circuit is shown in FIG. 3. The transceiver circuit includes a transmitting submodule 100, a receiving submodule 200, a circulator 300, a switch circuit 420, a switch circuit 440, a duplexer 500, and an antenna. Transmit signals generated by the transmitting submodule 100 include a TDD transmit signal and an FDD transmit signal. The TDD transmit signal and the FDD transmit signal pass through the circulator 300, and are subsequently output to a transmit port of the duplexer 500. A TDD receive channel is connected to a port b of the circulator 300. An FDD receive channel (including the receiving submodule 200 and the switch circuit 420) is connected to a receive port of the duplexer 500. The TDD receive channel and the FDD receive channel are switched via the switch circuit 420.

The applicant studies the foregoing transceiver circuits and finds that, a TDD transmit channel and an FDD transmit channel are a same channel, in other words, a TDD transmit signal and an FDD transmit signal share a same transmit channel. The FDD is in an always TX state. Therefore, a power amplifier of the transmit channel cannot be disabled, and this amplifies a noise in a TDD frequency band. The noise and a TDD receive signal are in a same frequency band. Consequently, the noise deteriorates sensitivity of a TDD receive channel. After the FDD transmit signal of the FDD transmit channel passes through the power amplifier, a large intermodulation signal is generated. The intermodulation signal falls into the TDD frequency band, and the intermodulation signal and the TDD receive channel are in the same frequency band. The intermodulation signal deteriorates the sensitivity of the TDD receive channel.

On this basis, an embodiment of this application provides a transceiver circuit. The transceiver circuit may be used in a transceiver. The transceiver may be used in a communication apparatus. The communication apparatus includes a network device and/or a terminal device. In the transceiver circuit, a first filter circuit is introduced to separate a TDD transmit signal and an FDD transmit signal, to effectively avoid mutual interference between the TDD transmit signal and the FDD transmit signal, and significantly improve performance of the FDD transmit signal. A switch circuit is disposed between the first filter circuit and a second filter circuit. This can provide effective isolation for the transmit signals of a transmitting submodule, to avoid impact, on a TDD receive signal, caused by noise generated when the FDD transmit signal is transmitted, and improve sensitivity of a TDD receive channel. In addition, the performance of the FDD transmit signal is not affected when switching of the switch circuit is performed. Two times of filtering of the first filter circuit and the second filter circuit are performed, so that a requirement on a performance indicator of a single filter circuit can be reduced. This facilitates a low-cost and compact design of the filter circuit. The following provides detailed descriptions with reference to the accompanying drawings.

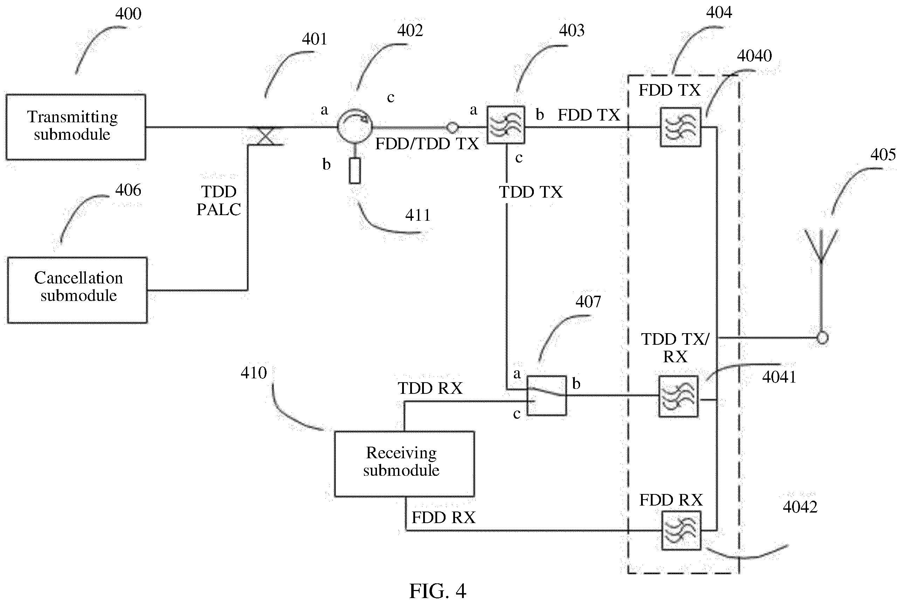

FIG. 4 is a schematic of a structure of a transceiver circuit according to an embodiment of this application. The transceiver circuit according to an embodiment of this application includes:
a transmitting submodule 400, a signal transmission module 402, a switch circuit 407, a first filter circuit 403, a second filter circuit 404, a receiving submodule 410, and an antenna 405.

The transmitting submodule 400 is connected to the first filter circuit 403 through the signal transmission module 402.

A first end of the first filter circuit 403 is connected to the signal transmission module 402. A second end of the first filter circuit 403 is connected to the second filter circuit 404. A third end of the first filter circuit 403 is connected to the switch circuit 407. The first filter circuit 403 is configured to separate a time division duplex TDD transmit signal and a frequency division duplex FDD transmit signal that are sent by the transmitting submodule 400. The first filter circuit 403 transmits the FDD transmit signal to the second filter circuit 404 through the second end of the first filter circuit 403. The first filter circuit 403 transmits the TDD transmit signal to the switch circuit 407 through the third end of the first filter circuit 403.

In a possible implementation, the first filter circuit 403 may alternatively be a duplexer. An implementation of the duplexer may be an on-board filter or a cavity filter.

A first end of the switch circuit 407 is connected to the first filter circuit 403. A second end of the switch circuit 407 is connected to the second filter circuit 404. A third end of the switch circuit 407 is connected to the receiving submodule 410.

When the first end of the switch circuit 407 and the second end of the switch circuit 407 are turned on, and the second end of the switch circuit 407 and the third end of the switch circuit 407 are turned off, the switch circuit 407 is configured to transmit the TDD transmit signal sent by the transmitting submodule 400. When the second end of the switch circuit 407 and the third end of the switch circuit 407 are turned on, and the first end of the switch circuit 407 and the second end of the switch circuit 407 are turned off, the switch circuit 407 is configured to transmit a TDD receive signal received by the second filter circuit 404.

The second filter circuit 404 is separately connected to the first filter circuit 403, the switch circuit 407, the receiving submodule 410, and the antenna 405. The second filter circuit 404 is configured to perform filtering processing on the TDD transmit signal and the FDD transmit signal that are sent by the transmitting submodule 400. The second filter circuit 404 is further configured to perform filtering processing on the TDD receive signal and an FDD receive signal that are received by the antenna 405.

Further, the transceiver circuit further includes a cancellation submodule 406. The cancellation submodule 406 is separately connected to the transmitting submodule 400 and the signal transmission module 402. The cancellation submodule 406 is configured to obtain a transmission noise of a transmit channel between the transmitting submodule 400 and the signal transmission module 402. The cancellation submodule 406 is further configured to generate a cancellation signal based on the transmission noise. The cancellation signal is for performing cancellation processing on the transmission noise.

Further, the cancellation submodule 406 specifically includes a cancellation processor and a cancellation coupler 401. The cancellation processor is connected to the transmit channel through the cancellation coupler 401. The cancellation processor is specifically configured to obtain the transmission noise through the cancellation coupler 401. The cancellation processor is specifically configured to generate the cancellation signal based on the transmission noise. The cancellation processor is specifically configured to perform cancellation processing on the transmission noise based on the cancellation signal. Specifically, the cancellation processing is: The cancellation processor performs a plurality of manners, including alignment and subtraction or alignment and addition, on the cancellation signal and a signal in a transmission channel to implement the cancellation processing. The transmission channel includes the transmit channel and/or a receive channel.

The second filter circuit 404 includes: an FDD transmit filter 4040, an FDD receive filter 4042, and a TDD transceiver filter 4041. The FDD transmit filter 4040 is separately connected to the second end of the first filter circuit 403 and the antenna 405. The FDD receive filter 4042 is separately connected to the antenna 405 and the receiving submodule 410. The TDD transceiver filter 4041 is separately connected to the second end of the switch circuit 407 and the antenna 405.

Further, in a possible implementation, the FDD transmit filter 4040, the FDD receive filter 4042, and the TDD transceiver filter 4041 may be an on-board filter or a cavity filter.

Specifically, after the transmitting submodule 400 generates the TDD transmit signal and the FDD transmit signal, and the TDD transmit signal and the FDD transmit signal pass through the cancellation coupler 401 and a circulator, the first filter circuit 403 groups the TDD transmit signal and the FDD transmit signal into two independent channels. One channel is used to transmit the TDD transmit signal, and the other is used to transmit the FDD transmit signal. The second end (namely, a port b of the first filter circuit 403 in FIG. 4) of the first filter circuit 403 is connected to the FDD transmit filter 4040 in the second filter circuit 404. The second end of the first filter circuit 403 transmits the FDD transmit signal to the FDD transmit filter 4040, and finally the FDD transmit signal is transmitted through the antenna 405. The third end (namely, a port c of the first filter circuit 403 in FIG. 4) of the first filter circuit 403 is connected to the switch circuit 407 (namely, a port a of the switch circuit 407 in FIG. 4). The third end of the first filter circuit 403 transmits the TDD transmit signal to the switch circuit 407. Then, the switch circuit 407 transmits the TDD transmit signal to the TDD transceiver filter 4041, and finally the TDD transmit signal is transmitted through the antenna 405.

The following describes a specific working manner of the cancellation submodule 406 in an embodiment of this application. A cancellation technology used by the cancellation submodule 406 is also referred to as power amplifier leakage cancellation (power amplifier leakage cancellation, PALC) or transmitter leakage cancellation (transmitter leakage cancellation, TXLC). Specifically, the cancellation submodule 406 obtains the transmission noise of the transmit channel between the transmitting submodule 400 and the signal transmission module 402 through the cancellation coupler 401. Then, the cancellation processor in the cancellation submodule 406 generates the cancellation signal based on the transmission noise. The cancellation signal is for performing the cancellation processing on the transmission noise. Specifically, the cancellation processing is: The cancellation processor performs the plurality of manners, including the alignment and the subtraction or the alignment and the addition, on the cancellation signal and the signal in the transmission channel to implement the cancellation processing. The transmission channel includes the transmit channel and/or the receive channel. A possible implementation is as follows: After the cancellation processor and a digital filter included in the cancellation submodule obtain the transmission noise, adjustment on amplitude, delay, phase, and the like is performed on the transmission noise to obtain the cancellation signal. The cancellation signal and the transmission noise may be aligned and subtracted.

In a possible implementation, the transmission noise includes one or more of the following: a noise floor generated by the TDD transmit signal in a TDD frequency band, a noise floor and an intermodulation noise of the FDD transmit signal in the TDD frequency band, or a noise floor and an intermodulation noise of the FDD transmit signal in an FDD receive frequency band. It may be understood that the transmission noise may alternatively be another noise in the transmit channel. This is not limited in embodiments of this application. The noise floor and the intermodulation signal are canceled due to the cancellation signal. The noise floor and the intermodulation signal arrive at the port a of the switch circuit 407. The switch circuit 407 is in a state in which a port b and a port c are connected, and there is isolation between the port a of the switch circuit 407 and the port b/c of the switch circuit 407. Therefore, under a joint effect of the cancellation submodule 406 and the switch circuit 407, the noise floor and the intermodulation signal can be suppressed as much as possible, to avoid impact on a TDD receive channel.

In a scenario in which there is a standing wave between the TDD transceiver filter 4041 and the antenna 405, the TDD transceiver filter 4041 and the antenna 405 reflect the noise floor sent by the transmit channel and the intermodulation signal generated by the FDD transmit signal in the TDD frequency band. Due to isolation between the port a and the port b/c of the TDD switch, the noise floor and the intermodulation signal generated by the FDD transmit signal in the TDD frequency band are greatly reduced after being processed due to the cancellation signal. Therefore, reflected signals of the TDD filter and the antenna 405 do not affect receiving sensitivity of the TDD receive signal.

In a possible implementation, the cancellation coupler 401 is a microstrip. In another possible implementation, the cancellation coupler 401 may be another discrete device having a coupling function. This is not limited in embodiments of this application.

Optionally, the transceiver circuit further includes a circulator load 411. The signal transmission module 402 is the circulator. A first end of the circulator is connected to the transmitting submodule 400. A second end of the circulator is connected to the circulator load 411. A third end of the circulator is connected to the first filter circuit 403. With reference to FIG. 4, the first end of the circulator is a port a of the circulator in FIG. 4. The second end of the circulator is a port b of the circulator in FIG. 4. The third end of the circulator is a port c of the circulator in FIG. 4. In a possible implementation, the circulator load 411 may be a resistance element. The second end of the circulator is connected to the circulator load 411. Therefore, there is isolation between the third end of the circulator and the first end of the circulator, to effectively reduce impact, on the transmit channel, caused when switching of the switch circuit 407 is performed.

In a possible implementation, the transmitting submodule 400 includes one or more of the following elements: a digital signal processing module, a digital-to-analog converter, a low-pass filter, a variable gain amplifier, a modulator, a phase-locked loop, and a plurality of power amplifiers. The digital signal processing module, the digital-to-analog converter, the low-pass filter, the variable gain amplifier, the modulator, and the plurality of power amplifiers are connected in sequence, and the phase-locked loop is connected to the modulator.

In a possible implementation, the receiving submodule 410 includes one or more of the following elements: a digital signal processing module, an analog-to-digital converter, a low-pass filter, a variable gain amplifier, a mixer, a phase-locked loop, and a plurality of low-noise amplifiers. The digital signal processing module, the analog-to-digital converter, the low-pass filter, the variable gain amplifier, the frequency mixer, and the plurality of low-noise amplifiers are connected in sequence, and the phase-locked loop is connected to the mixer.

In an embodiment of this application, the first filter circuit 403 is introduced to separate the TDD transmit signal and the FDD transmit signal, to effectively avoid mutual interference between the TDD transmit signal and the FDD transmit signal, and significantly improve performance of the FDD transmit signal. The switch circuit 407 is disposed between the first filter circuit 403 and the second filter circuit 404. This can provide effective isolation for the transmit signals of the transmitting submodule 400, to avoid impact, on the TDD receive signal, caused by a noise generated when the FDD transmit signal is transmitted, and improve sensitivity of the TDD receive channel. In addition, the performance of the FDD transmit signal is not affected when switching of the switch circuit 407 is performed. Two times of filtering of the first filter circuit 403 and the second filter circuit 404 are performed, so that a requirement on a performance indicator of a single filter circuit can be reduced. This facilitates a low-cost and compact design of the filter circuit. The cancellation signal generated by the cancellation submodule 406 can reduce impact of the transmit signal and the noise floor of the transmit channel on the receive signal, and can reduce a requirement on a performance indicator of the second filter circuit 404. This facilitates the low-cost and compact design of the filter circuit. In addition, a requirement on the isolation of the switch circuit 407 can be effectively reduced.

With reference to the foregoing embodiments, the following describes an application scenario of a transceiver circuit according to this application. For example, a frequency sub-band of 3GPP B3 is selected as an FDD frequency band. A transmit frequency range is 1805 to 1830 MHz, and a receive frequency range is 1710 to 1735 MHz (referred to as a B3 frequency band hereinafter). A frequency sub-band of 3GPP B39 is selected as the TDD frequency band, and a transmit frequency range and a receive frequency range are both 1885 to 1915 MHz (referred to as a B39 frequency band hereinafter). The B3 frequency band and the B39 frequency band share the transmitting submodule 400, the cancellation submodule 406, and the signal transmission module 402 (namely, the circulator 402). After a transmit signal of the B3 frequency band and a transmit signal of the B39 frequency band pass through the first filter circuit 403, the transmit signal of the B3 frequency band is transmitted to the second filter circuit 404 through the second end of the first filter circuit 403, and is transmitted through the antenna 405 after being processed by the FDD transmit filter 4040 in the second filter circuit 404. The transmit signal of the B39 frequency band is transmitted to the switch circuit 407 through the third end of the first filter circuit 403, and is transmitted through the antenna 405 after being processed by the TDD transceiver filter 4041. The second end of the first filter circuit 403 works in the 1805 to 1830 MHz, and suppression on the frequency band of 1885 to 1915 MHz may reach more than 20 dB. Therefore, the switching of the switch circuit 407 does not affect impedance at the second end of the first filter circuit 403. The signal transmission module 402 (namely, the circulator) is connected to the circulator load 411. Therefore, isolation of about 20 dB also exists between the third end of the circulator and the first end of the circulator. The switching of the switch circuit 407 does not affect output impedance of the transmitting submodule 400 either.

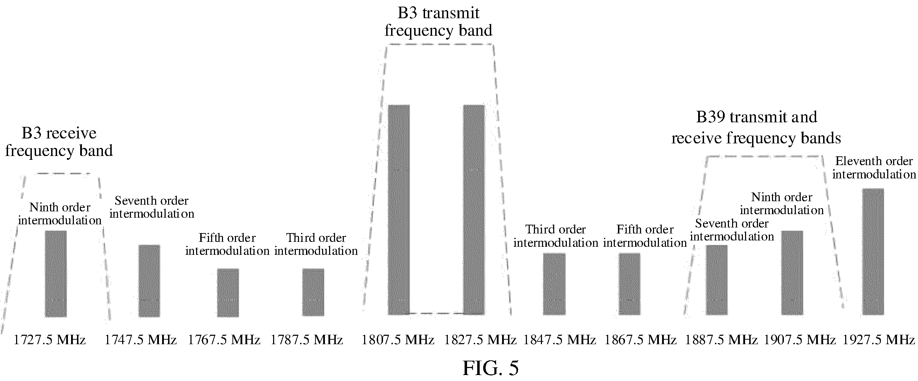

The FDD transmit signals generate intermodulation signals in the FDD receive frequency band and the TDD frequency band. For ease of understanding, refer to FIG. 5 that is a diagram of intermodulation signals generated by FDD transmit signals in an FDD receive frequency band and a TDD receive frequency band. Two transmit signals in a B3 frequency band are respectively in 1807.5 MHz and 1827.5 MHz, and both are 5 MHz broadband signals. Ninth order intermodulation signals, of the two transmit signals, at a low-frequency band are in 1727.5 MHz, and fall into a receive frequency band of the B3 frequency band. A seventh order intermodulation signal and a ninth order intermodulation signal, of the two transmit signals, at a high-frequency band are respectively in 1887.5 MHz and 1907.5 MHz, and fall into a receive frequency band of a B39 frequency band. The two intermodulation signals are large, and may affect receiving sensitivity of the B3 frequency band and receiving sensitivity of the B39 frequency band. The cancellation submodule 406 may collect an intermodulation signal that falls into the B3 receive frequency band and generate a cancellation signal, to reduce suppression of the FDD transmit filter 4040 in the receive frequency band. The cancellation submodule 406 may also collect an intermodulation signal that falls into the B39 receive frequency band and generate a cancellation signal. Based on transceiver isolation provided by a TDD switch, the intermodulation signal of the B3 frequency band does not affect the receiving sensitivity of the B39 frequency band.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In addition, the term "system" in this specification may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that, that B may be determined based on A means that B is determined based on A, and B may also be determined based on A and/or other information.

In summary, the foregoing descriptions are merely example embodiments of the technical solutions of this application, but are not intended to limit the protection scope of this application. Any modification, or improvement made without departing from the principle of this application shall fall within the protection scope of this application.

## Claims

1. A transceiver circuit, comprising:
a transmitting submodule (400), a signal transmission module (402), a switch circuit (407), a first filter circuit (403), a second filter circuit (404), a receiving submodule (410), and an antenna (405), wherein
the transmitting submodule (400) is connected to the first filter circuit (403) through the signal transmission module (402);
a first end of the first filter circuit (403) is connected to the signal transmission module (402), a second end of the first filter circuit (403) is connected to the second filter circuit (404), and a third end of the first filter circuit (403) is connected to the switch circuit (407); the first filter circuit (403) is configured to separate a time division duplex, TDD transmit signal and a frequency division duplex, FDD transmit signal that are sent by the transmitting submodule (400), the first filter circuit (403) transmits the FDD transmit signal to the second filter circuit (404) through the second end of the first filter circuit (403), and the first filter circuit (403) transmits the TDD transmit signal to the switch circuit (407) through the third end of the first filter circuit (403);
a first end of the switch circuit (407) is connected to the first filter circuit (403), a second end of the switch circuit (407) is connected to the second filter circuit (404), and a third end of the switch circuit (407) is connected to the receiving submodule (410);
when the first end of the switch circuit (407) and the second end of the switch circuit (407) are turned on, and the second end of the switch circuit (407) and the third end of the switch circuit (407) are turned off, the switch circuit (407) is configured to transmit the TDD transmit signal sent by the transmitting submodule (400);
when the second end of the switch circuit (407) and the third end of the switch circuit (407) are turned on, and the first end of the switch circuit (407) and the second end of the switch circuit (407) are turned off, the switch circuit (407) is configured to transmit a TDD receive signal received by the second filter circuit (404); and
the second filter circuit (404) is separately connected to the first filter circuit (403), the switch circuit (407), the receiving submodule (410), and the antenna (405), the second filter circuit (404) is configured to perform filtering processing on the TDD transmit signal and the FDD transmit signal that are sent by the transmitting submodule (400), and the second filter circuit (404) is further configured to perform filtering processing on the TDD receive signal and an FDD receive signal that are received by the antenna (405).

2. The transceiver circuit according to claim 1, wherein
the transceiver circuit further comprises a cancellation submodule (406), wherein the cancellation submodule (406) is separately connected to the transmitting submodule (400)and the signal transmission module (402);
the cancellation submodule (406) is configured to obtain a transmission noise of a transmit channel between the transmitting submodule (400) and the signal transmission module (402); and
the cancellation submodule (406) is further configured to generate a cancellation signal based on the transmission noise, wherein the cancellation signal is for performing cancellation processing on the transmission noise.

3. The transceiver circuit according to claim 2, wherein
the cancellation submodule (406) specifically comprises a cancellation processor and a cancellation coupler (401), wherein the cancellation processor is connected to the transmit channel through the cancellation coupler (401) ;
the cancellation processor is specifically configured to obtain the transmission noise through the cancellation coupler (401) ;
the cancellation processor is specifically configured to generate the cancellation signal based on the transmission noise; and
the cancellation processor is specifically configured to perform cancellation processing on the transmission noise based on the cancellation signal.

4. The transceiver circuit according to claim 3, wherein
the cancellation coupler (401) is a microstrip.

5. The transceiver circuit according to any one of claims 2 to 4, wherein
the transmission noise comprises one or more of the following: a noise floor generated by the TDD transmit signal in a TDD frequency band, a noise floor and an intermodulation noise of the FDD transmit signal in the TDD frequency band, and a noise floor and an intermodulation noise of the FDD transmit signal in an FDD receive frequency band.

6. The transceiver circuit according to any one of claims 1 to 5, wherein
the transceiver circuit further comprises a circulator load (411), wherein the signal transmission module (402) is a circulator, a first end of the circulator is connected to the transmitting submodule (400), a second end of the circulator is connected to the circulator load (411), and a third end of the circulator is connected to the first filter circuit (403).

7. The transceiver circuit according to any one of claims 1 to 6, wherein the first filter circuit (403) is an on-board filter or a cavity filter.

8. The transceiver circuit according to any one of claims 1 to 7, wherein
the second filter circuit (404) comprises an FDD transmit filter, an FDD receive filter, and a TDD transceiver filter, wherein the FDD transmit filter is separately connected to the second end of the first filter circuit (403) and the antenna (405), the FDD receive filter is separately connected to the antenna (405) and the receiving submodule (410), and the TDD transceiver filter is separately connected to the second end of the switch circuit (407) and the antenna (405).

9. The transceiver circuit according to any one of claims 1 to 8, wherein
the transmitting submodule (400) comprises one or more of the following elements: a digital signal processing module, a digital-to-analog converter, a low-pass filter, a variable gain amplifier, a modulator, a phase-locked loop, and a plurality of power amplifiers, wherein the digital signal processing module, the digital-to-analog converter, the low-pass filter, the variable gain amplifier, the modulator, and the plurality of power amplifiers are connected in sequence, and the phase-locked loop is connected to the modulator.

10. The transceiver circuit according to any one of claims 1 to 9, wherein
the receiving submodule (410) comprises one or more of the following elements: a digital signal processing module, an analog-to-digital converter, a low-pass filter, a variable gain amplifier, a mixer, a phase-locked loop, and a plurality of low-noise amplifiers, wherein the digital signal processing module, the analog-to-digital converter, the low-pass filter, the variable gain amplifier, the frequency mixer, and the plurality of low-noise amplifiers are connected in sequence, and the phase-locked loop is connected to the frequency mixer.

11. A transceiver, wherein the transceiver comprises the transceiver circuit according to any one of claims 1 to 10.

12. A communication apparatus, wherein the communication apparatus comprises the transceiver according to claim 11.

## Patentansprüche

1. Transceiverschaltung, die umfasst:
ein Übertragungssubmodul (400), ein Signalübertragungsmodul (402), eine Schalterschaltung (407), eine erste Filterschaltung (403), eine zweite Filterschaltung (404), ein Empfangssubmodul (410) und eine Antenne (405), wobei das Übertragungssubmodul (400) über das Signalübertragungsmodul (402) mit der ersten Filterschaltung (403) verbunden ist;
ein erstes Ende der ersten Filterschaltung (403) mit dem Signalübertragungsmodul (402) verbunden ist, ein zweites Ende der ersten Filterschaltung (403) mit der zweiten Filterschaltung (404) verbunden ist und ein drittes Ende der ersten Filterschaltung (403) mit der Schalterschaltung (407) verbunden ist; die erste Filterschaltung (403) konfiguriert ist, um ein Zeitmultiplex-Duplex(TDD)-Übertragungssignal und ein Frequenzmultiplex-Duplex(FDD)-Übertragungssignal zu trennen, die durch das Übertragungssubmodul (400) gesendet werden, wobei die erste Filterschaltung (403) das FDD-Übertragungssignal an die zweite Filterschaltung (404) über das zweite Ende der ersten Filterschaltung (403) überträgt und die erste Filterschaltung (403) das TDD-Übertragungssignal an die Schalterschaltung (407) über das dritte Ende der ersten Filterschaltung (403) überträgt;
ein erstes Ende der Schalterschaltung (407) mit der ersten Filterschaltung (403) verbunden ist, ein zweites Ende der Schalterschaltung (407) mit der zweiten Filterschaltung (404) verbunden ist und ein drittes Ende der Schalterschaltung (407) mit dem Empfangssubmodul (410) verbunden ist;
wenn das erste Ende der Schalterschaltung (407) und das zweite Ende der Schalterschaltung (407) eingeschaltet sind und das zweite Ende der Schalterschaltung (407) und das dritte Ende der Schalterschaltung (407) ausgeschaltet sind, die Schalterschaltung (407) konfiguriert ist, um das TDD-Übertragungssignal, das durch das Übertragungssubmodul (400) gesendet wird, zu übertragen;
wenn das zweite Ende der Schalterschaltung (407) und das dritte Ende der Schalterschaltung (407) eingeschaltet sind und das erste Ende der Schalterschaltung (407) und das zweite Ende der Schalterschaltung (407) ausgeschaltet sind, die Schalterschaltung (407) konfiguriert ist, um ein TDD-Empfangssignal, das durch die zweite Filterschaltung (404) empfangen wird, zu übertragen; und
die zweite Filterschaltung (404) separat mit der ersten Filterschaltung (403), der Schalterschaltung (407), dem Empfangssubmodul (410) und der Antenne (405) verbunden ist, die zweite Filterschaltung (404) konfiguriert ist, um eine Filterungsverarbeitung an dem TDD-Übertragungssignal und dem FDD-Übertragungssignal, die durch das Übertragungssubmodul (400) gesendet werden, durchzuführen und die zweite Filterschaltung (404) ferner konfiguriert ist, um eine Filterungsverarbeitung an dem TDD-Empfangssignal und einem FDD-Empfangssignal, die durch die Antenne (405) empfangen werden, durchzuführen.

2. Transceiverschaltung nach Anspruch 1, wobei
die Transceiverschaltung ferner ein Unterdrückungssubmodul (406) umfasst, wobei das Unterdrückungssubmodul (406) separat mit dem Übertragungssubmodul (400) und dem Signalübertragungsmodul (402) verbunden ist;
das Unterdrückungssubmodul (406) konfiguriert ist, um ein Übertragungsrauschen eines Übertragungskanals zwischen dem Übertragungssubmodul (400) und dem Signalübertragungsmodul (402) zu erhalten; und
das Unterdrückungssubmodul (406) ferner konfiguriert ist, um basierend auf dem Übertragungsrauschen ein Unterdrückungssignal zu erzeugen, wobei das Unterdrückungssignal dazu dient, eine Unterdrückungsverarbeitung an dem Übertragungsrauschen durchzuführen.

3. Transceiverschaltung nach Anspruch 2, wobei
das Unterdrückungssubmodul (406) insbesondere einen Unterdrückungsprozessor und einen Unterdrückungskoppler (401) umfasst, wobei der Unterdrückungsprozessor über den Unterdrückungskoppler (401) mit dem Übertragungskanal verbunden ist; der Unterdrückungsprozessor speziell konfiguriert ist, um das Übertragungsrauschen über den Unterdrückungskoppler (401) zu erhalten;
der Unterdrückungsprozessor speziell konfiguriert ist, um das Unterdrückungssignal basierend auf dem Übertragungsrauschen zu erzeugen; und
der Unterdrückungsprozessor speziell konfiguriert ist, um basierend auf dem Unterdrückungssignal eine Unterdrückungsverarbeitung an dem Übertragungsrauschen durchzuführen.

4. Transceiverschaltung nach Anspruch 3, wobei
der Unterdrückungskoppler (401) ein Mikrostreifenleiter ist.

5. Transceiverschaltung nach einem der Ansprüche 2 bis 4, wobei
das Übertragungsrauschen eines oder mehrere der Folgenden umfasst: ein Grundrauschen, das durch das TDD-Übertragungssignal in einem TDD-Frequenzband erzeugt wird, ein Grundrauschen und ein Intermodulationsrauschen des FDD-Übertragungssignals in dem TDD-Frequenzband und ein Grundrauschen und ein Intermodulationsrauschen des FDD-Übertragungssignals in einem FDD-Empfangsfrequenzband.

6. Transceiverschaltung nach einem der Ansprüche 1 bis 5, wobei
die Transceiverschaltung ferner eine Zirkulatorlast (411) umfasst, wobei das Signalübertragungsmodul (402) ein Zirkulator ist, ein erstes Ende des Zirkulators mit dem Übertragungssubmodul (400) verbunden ist, ein zweites Ende des Zirkulators mit der Zirkulatorlast (411) verbunden ist und ein drittes Ende des Zirkulators mit der ersten Filterschaltung (403) verbunden ist.

7. Transceiverschaltung nach einem der Ansprüche 1 bis 6, wobei die erste Filterschaltung (403) ein On-Board-Filter oder ein Hohlraumfilter ist.

8. Transceiverschaltung nach einem der Ansprüche 1 bis 7, wobei
die zweite Filterschaltung (404) ein FDD-Übertragungsfilter, ein FDD-Empfangsfilter und ein TDD-Transceiverfilter umfasst, wobei das FDD-Übertragungsfilter separat mit dem zweiten Ende der ersten Filterschaltung (403) und der Antenne (405) verbunden ist, das FDD-Empfangsfilter separat mit der Antenne (405) und dem Empfangssubmodul (410) verbunden ist und das TDD-Transceiverfilter separat mit dem zweiten Ende der Schalterschaltung (407) und der Antenne (405) verbunden ist.

9. Transceiverschaltung nach einem der Ansprüche 1 bis 8, wobei
das Übertragungssubmodul (400) eines oder mehrere der folgenden Elemente umfasst: ein digitales Signalverarbeitungsmodul, einen Digital-Analog-Wandler, ein Tiefpassfilter, einen Verstärker mit variabler Verstärkung, einen Modulator, einen Phasenregelkreis und eine Vielzahl von Leistungsverstärkern, wobei das digitale Signalverarbeitungsmodul, der Digital-Analog-Wandler, das Tiefpassfilter, der Verstärker mit variabler Verstärkung, der Modulator und die Vielzahl von Leistungsverstärkern nacheinander verbunden sind und der Phasenregelkreis mit dem Modulator verbunden ist.

10. Transceiverschaltung nach einem der Ansprüche 1 bis 9, wobei
das Empfangssubmodul (410) eines oder mehrere der folgenden Elemente umfasst: ein digitales Signalverarbeitungsmodul, einen Analog-Digital-Wandler, ein Tiefpassfilter, einen Verstärker mit variabler Verstärkung, einen Mischer, einen Phasenregelkreis und eine Vielzahl von rauscharmen Verstärkern, wobei das digitale Signalverarbeitungsmodul, der Analog-Digital-Wandler, das Tiefpassfilter, der Verstärker mit variabler Verstärkung, der Frequenzmischer und die Vielzahl von rauscharmen Verstärkern nacheinander verbunden sind und der Phasenregelkreis mit dem Frequenzmischer verbunden ist.

11. Transceiver, wobei der Transceiver die Transceiverschaltung nach einem der Ansprüche 1 bis 10 umfasst.

12. Kommunikationseinrichtung, wobei die Kommunikationseinrichtung den Transceiver nach Anspruch 11 umfasst.

## Revendications

1. Circuit émetteur-récepteur, comprenant :
un sous-module de transmission (400), un module de transmission de signal (402), un circuit de commutation (407), un premier circuit de filtre (403), un second circuit de filtre (404), un sous-module de réception (410), et une antenne (405), dans lequel le sous-module de transmission (400) est connecté au premier circuit de filtre (403) par l'intermédiaire du module de transmission de signal (402) ;
une première extrémité du premier circuit de filtre (403) est connectée au module de transmission de signal (402), une deuxième extrémité du premier circuit de filtre (403) est connectée au second circuit de filtre (404), et une troisième extrémité du premier circuit de filtre (403) est connectée au circuit de commutation (407) ; le premier circuit de filtre (403) est configuré pour séparer un signal de transmission de duplex à répartition dans le temps, TDD, et un signal de transmission de duplex à répartition en fréquence, FDD, qui sont envoyés par le sous-module de transmission (400), le premier circuit de filtre (403) transmet le signal de transmission FDD au second circuit de filtre (404) par l'intermédiaire de la deuxième extrémité du premier circuit de filtre (403), et le premier circuit de filtre (403) transmet le signal de transmission TDD au circuit de commutation (407) par l'intermédiaire de la troisième extrémité du premier circuit de filtre (403) ;
une première extrémité du circuit de commutation (407) est connectée au premier circuit de filtre (403), une deuxième extrémité du circuit de commutation (407) est connectée au second circuit de filtre (404), et une troisième extrémité du circuit de commutation (407) est connectée au sous-module de réception (410) ;
lorsque la première extrémité du circuit de commutation (407) et la deuxième extrémité du circuit de commutation (407) sont activées, et que la deuxième extrémité du circuit de commutation (407) et la troisième extrémité du circuit de commutation (407) sont fermées, le circuit de commutation (407) est configuré pour transmettre le signal de transmission TDD envoyé par le sous-module de transmission (400) ;
lorsque la deuxième extrémité du circuit de commutation (407) et la troisième extrémité du circuit de commutation (407) sont activées, et que la première extrémité du circuit de commutation (407) et la deuxième extrémité du circuit de commutation (407) sont fermées, le circuit de commutation (407) est configuré pour transmettre un signal de réception TDD reçu par le second circuit de filtre (404) ; et le second circuit de filtre (404) est connecté séparément au premier circuit de filtre (403), au circuit de commutation (407), au sous-module de réception (410), et à l'antenne (405), le second circuit de filtre (404) est configuré pour effectuer un traitement de filtrage sur le signal de transmission TDD et le signal de transmission FDD qui sont envoyés par le sous-module de transmission (400), et le second circuit de filtre (404) est en outre configuré pour effectuer un traitement de filtrage sur le signal de réception TDD et un signal de réception FDD qui sont reçus par l'antenne (405).

2. Circuit émetteur-récepteur selon la revendication 1, dans lequel
le circuit émetteur-récepteur comprend en outre un sous-module d'annulation (406), dans lequel le sous-module d'annulation (406) est connecté séparément au sous-module de transmission (400) et au module de transmission de signal (402) ;
le sous-module d'annulation (406) est configuré pour obtenir un bruit de transmission d'un canal de transmission entre le sous-module de transmission (400) et le module de transmission de signal (402) ; et
le sous-module d'annulation (406) est en outre configuré pour générer un signal d'annulation en fonction du bruit de transmission, dans lequel le signal d'annulation est destiné à effectuer un traitement d'annulation sur le bruit de transmission.

3. Circuit émetteur-récepteur selon la revendication 2, dans lequel
le sous-module d'annulation (406) comprend spécifiquement un processeur d'annulation et un coupleur d'annulation (401), dans lequel le processeur d'annulation est connecté au canal de transmission par l'intermédiaire du coupleur d'annulation (401) ;
le processeur d'annulation est spécifiquement configuré pour obtenir le bruit de transmission par l'intermédiaire du coupleur d'annulation (401) ;
le processeur d'annulation est spécifiquement configuré pour générer le signal d'annulation en fonction du bruit de transmission ; et
le processeur d'annulation est spécifiquement configuré pour effectuer un traitement d'annulation sur le bruit de transmission en fonction du signal d'annulation.

4. Circuit émetteur-récepteur selon la revendication 3, dans lequel
le coupleur d'annulation (401) est un microruban.

5. Circuit émetteur-récepteur selon l'une quelconque des revendications 2 à 4, dans lequel
le bruit de transmission comprend un ou plusieurs des éléments suivants : un bruit de fond généré par le signal de transmission TDD dans une bande de fréquences TDD, un bruit de fond et un bruit d'intermodulation du signal de transmission FDD dans la bande de fréquences TDD, et un bruit de fond et un bruit d'intermodulation du signal de transmission FDD dans une réception de bande de fréquences FDD.

6. Circuit émetteur-récepteur selon l'une quelconque des revendications 1 à 5, dans lequel
le circuit émetteur-récepteur comprend en outre une charge de circulateur (411), dans lequel le module de transmission de signal (402) est un circulateur, une première extrémité du circulateur est connectée au sous-module de transmission (400), une deuxième extrémité du circulateur est connectée à la charge de circulateur (411), et une troisième extrémité du circulateur est connectée au premier circuit de filtre (403).

7. Circuit émetteur-récepteur selon l'une quelconque des revendications 1 à 6, dans lequel le premier circuit de filtre (403) est un filtre intégré ou un filtre à cavité.

8. Circuit émetteur-récepteur selon l'une quelconque des revendications 1 à 7, dans lequel
le second circuit de filtre (404) comprend un filtre de transmission FDD, un filtre de réception FDD et un filtre émetteur-récepteur TDD, dans lequel le filtre de transmission FDD est connecté séparément à la deuxième extrémité du premier circuit de filtre (403) et à l'antenne (405), le filtre de réception FDD est connecté séparément à l'antenne (405) et au sous-module de réception (410), et le filtre émetteur-récepteur TDD est connecté séparément à la deuxième extrémité du circuit de commutation (407) et à l'antenne (405).

9. Circuit émetteur-récepteur selon l'une quelconque des revendications 1 à 8, dans lequel
le sous-module de transmission (400) comprend un ou plusieurs des éléments suivants : un module de traitement de signal numérique, un convertisseur numérique-analogique, un filtre passe-bas, un amplificateur à gain variable, un modulateur, une boucle à verrouillage de phase, et une pluralité d'amplificateurs de puissance, dans lequel le module de traitement de signal numérique, le convertisseur numérique-analogique, le filtre passe-bas, l'amplificateur à gain variable, le modulateur, et la pluralité d'amplificateurs de puissance sont connectés en séquence, et la boucle à verrouillage de phase est connectée au modulateur.

10. Circuit émetteur-récepteur selon l'une quelconque des revendications 1 à 9, dans lequel
le sous-module de réception (410) comprend un ou plusieurs des éléments suivants : un module de traitement de signal numérique, un convertisseur analogique-numérique, un filtre passe-bas, un amplificateur à gain variable, un mélangeur, une boucle à verrouillage de phase, et une pluralité d'amplificateurs à faible bruit, dans lequel le module de traitement de signal numérique, le convertisseur analogique-numérique, le filtre passe-bas, l'amplificateur à gain variable, le mélangeur de fréquences, et la pluralité d'amplificateurs à faible bruit sont connectés en séquence, et la boucle à verrouillage de phase est connectée au mélangeur de fréquences.

11. Émetteur-récepteur, dans lequel l'émetteur-récepteur comprend le circuit émetteur-récepteur selon l'une quelconque des revendications 1 à 10.

12. Appareil de communication, dans lequel l'appareil de communication comprend l'émetteur-récepteur selon la revendication 11.
